(19) Europäisches Patentamt
European Patent Office
Office européen des brevets

(11) **EP 4 682 544 A1**

(12) **EUROPEAN PATENT APPLICATION**
published in accordance with Art. 153(4) EPC

(43) Date of publication:
**21.01.2026 Bulletin 2026/04**

(21) Application number: **24770315.0**

(22) Date of filing: **07.02.2024**

(51) International Patent Classification (IPC):
**G01N 35/00** (2006.01)

(52) Cooperative Patent Classification (CPC):
**G01N 35/00**

(86) International application number:
**PCT/JP2024/004216**

(87) International publication number:
**WO 2024/190197 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.03.2023 JP 2023040369**

(71) Applicant: **HITACHI HIGH-TECH CORPORATION**
**Tokyo 105-6409 (JP)**

(72) Inventors:
• **TAGAMI Ryo**
  **Tokyo 105-6409 (JP)**
• **YAMAGUCHI Shigeki**
  **Tokyo 105-6409 (JP)**
• **TSUJIMURA Naoto**
  **Tokyo 105-6409 (JP)**
• **MATSUOKA Shinya**
  **Tokyo 105-6409 (JP)**

(74) Representative: **Strehl & Partner mbB**
**Maximilianstrasse 54**
**80538 München (DE)**

(54) **AUTOMATIC ANALYSIS DEVICE**

(57) To provide an automatic analyzer which can prevent an overflow of a waste liquid from a waste liquid tank even if the waste liquid tank is not provided with a liquid quantity sensor.

An automatic analyzer for analyzing a sample includes a waste liquid tank for storing a waste liquid generated from an analysis of the sample, a flow passage connected to the waste liquid tank, to which the waste liquid flows, a measurement section disposed in the flow passage in order to measure quantity of the waste liquid flowing to the waste liquid tank; and a warning section for outputting a warning when the quantity of the waste liquid measured by the measurement section reaches a predetermined value.

[FIG. 3]

START
S301 — Nop = 0
S302 — STOP INSTRUCTION ISSUED? — No
Yes
END
S303 — CLOSE SV71
S304 — LOWER THAN HIGH LIQUID LEVEL? — Yes
No
S305 — OPEN SV71 (Nop = Nop+1)    S311 — ISSUE STOP INSTRUCTION
S306 — Nop < Nth? — Yes
No
S307 — WARNING OF WASTE LIQUID TANK REPLACEMENT
S308 — STANDBY UNTIL ELAPSE OF t1
S309 — EQUAL TO OR HIGHER THAN LOW LIQUID LEVEL? — Yes
No
S310 — UPDATE REMAINING CAPACITY OF WASTE LIQUID TANK

EP 4 682 544 A1

**Description**

Technical Field

The present invention relates to an automatic analyzer.

Background Art

An automatic analyzer that analyzes a sample such as blood, urine or the like discharges a waste liquid generated in an analysis. The waste liquid contains infectious substances or the like and hence, the waste liquid is stored in a waste liquid tank in most cases. Further, it is necessary to prevent a waste liquid from overflowing from the waste liquid tank.

Patent Literature 1 discloses the prevention of overflowing of a waste liquid from a waste liquid tank based on a liquid surface detected by a liquid quantity sensor mounted on a liquid waste tank.

Citation List

Patent Literature

Patent Literature 1: International Publication WO 2021/038918

Summary of Invention

Technical Problem

However, in Patent Literature 1, a case where a liquid quantity sensor is not able to be mounted on a waste liquid tank is not taken into consideration. In a case where a company requests a waste liquid collector dedicated to the recovery of a waste liquid tank in which a waste liquid containing an organic solvent and the like is stored, the waste liquid tank that is designated by the waste liquid collector is used. It is difficult to mount a liquid quantity sensor on the waste liquid tank designated by the waste liquid collector.

The present invention has been made in view of the above-mentioned circumstances, and it is an object of the present invention to provide an automatic analyzer capable of preventing overflowing of a waste liquid from a waste liquid tank even in a case where a liquid quantity sensor cannot be mounted on the waste liquid tank.

Solution to Problem

To achieve the above-mentioned object, the present invention provides an automatic analyzer for analyzing a sample. The automatic analyzer includes a waste liquid tank for storing a waste liquid generated from an analysis of the sample, a flow passage connected to the waste liquid tank, to which the waste liquid flows, a measurement section disposed in the flow passage in order to measure quantity of the waste liquid flowing to the waste liquid tank; and a warning section for outputting a warning when the quantity of the waste liquid measured by the measurement section reaches a predetermined value.

Advantageous Effects of Invention

According to the present invention, it is possible to provide an automatic analyzer capable of preventing overflowing of a waste liquid from a waste liquid tank even in a case where a liquid quantity sensor cannot be mounted on the waste liquid tank.

Brief Description of Drawings

[FIG. 1] FIG. 1 illustrates an exemplary structure of an automatic analyzer.
[FIG. 2] FIG. 2 illustrates an exemplary structure of a measurement section.
[FIG. 3] FIG. 3 represents an example of a processing flow according to a first embodiment.
[FIG. 4] FIG. 4 illustrates an example of a liquid level display screen.
[FIG. 5] FIG. 5 illustrates an exemplary structure of a waste liquid transfer section.

[FIG. 6] FIG. 6 represents an example of a processing flow according to a second embodiment.

[FIG. 7] FIG. 7 represents an example of a processing flow of a waste liquid aspiration operation.

[FIG. 8] FIG. 8 represents an example of a processing flow of selecting a waste liquid discharge destination.

[FIG. 9] FIG. 9 illustrates an example of a liquid level display screen.

[FIG. 10] FIG. 10 illustrates an exemplary structure of a measurement section.

Description of Embodiments

Hereinafter, embodiments of an automatic analyzer according to the present invention are described with reference to attached drawings.

First Embodiment

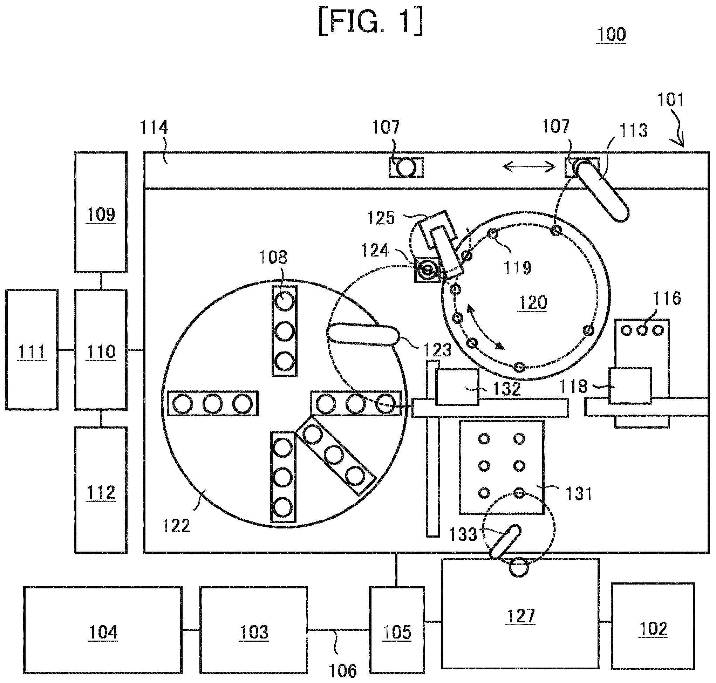

Constitutional example of an automatic analyzer 100 is described using FIG. 1. The automatic analyzer 100 is a device that performs a qualitative analysis and a quantitative analysis of a sample such as blood, urine, cerebrospinal fluid or the like. The automatic analyzer 100 includes a preprocessing section 101, a separation section 127, an analysis section 102, a waste liquid port 105, a measurement section 103, a waste liquid tank 104, a control section 110, a storage section 109, an operation section 111, and a display section 112. Hereinafter, the description is made with respect to the respective sections.

The preprocessing section 101 performs preprocessing of a sample, and includes a transport path 114, a reaction disk 120, a transport section 118, a sample dispensing section 113, a reagent disk 122, a reagent dispensing section 123, a magnetic separation section 124, a transport section 125, an evaporation concentration section 131, a transport section 132, and a concentrated liquid dispensing section 133. The transport path 114 transports a sample container 107 that accommodates a sample to a position that the sample dispensing section 113 accesses.

The reaction disk 120 has a plurality of openings 119 in each of which a reaction vessel 116 is disposed. The reaction disk 120 moves the reaction vessel 116 to a predetermined position by being rotated. The reaction disk 120 is held at a predetermined temperature. The transport section 118 transports an unused reaction vessel 116 to the opening 119, and transports a used reaction vessel 116 from the opening 119. The sample dispensing section 113 dispenses a sample from the sample container 107 to the reaction vessel 116 disposed at the opening 119.

The reagent disk 122 preserves a reagent container 108 that stores a reagent to be reacted with a sample, and moves the reagent container 108 to a predetermined position by being rotated. The reagent dispensing section 123 dispenses a reagent to the reaction vessel 116 in which the sample is dispensed from the reagent container 108. In the reaction vessel 116 in which the sample and the reagent are dispensed, by keeping the reaction disk 120 at a predetermined temperature, a reaction between the sample and the reagent is promoted thus producing a reaction liquid. The reagent may contain an organic solvent.

The magnetic separation section 124 separates magnetic beads from a reaction liquid accommodated in the reaction vessel 116 due to a magnetic force of a magnet. The transport section 125 transports the reaction vessel 116 in which magnetic beads are contained to the magnetic separation section 124 from the reaction disk 120, or transports the reaction vessel 116 from which the magnetic beads are separated to the reaction disk 120 from the magnetic separation section 124.

The evaporation concentration section 131 produces a concentrated liquid by evaporating extra moisture in a reaction liquid accommodated in the reaction vessel 116. The transport section 132 transports the reaction vessel 116 from the reaction disk 120 to the evaporation concentration section 131. The concentrated liquid dispensing section 133 dispenses a concentrated liquid from the evaporation concentration section 131 to the separation section 127.

The separation section 127 is provided for separating an analysis object content from a concentrated liquid dispensed from the concentrated liquid dispensing section 133. The separation section 127 separates an analysis object content from the concentrated liquid by a centrifugal separation method, for example.

The analysis section 102 performs an analysis by detecting an analysis object content separated by the separation section 127. The analysis section 102 may use any suitable analysis method. For example, the analysis method may be an LC-MS analysis where liquid chromatography (LC) and mass spectrometry (MS) are connected to each other, or the combination of an LC analysis, a biochemical analysis, and a genetic analysis.

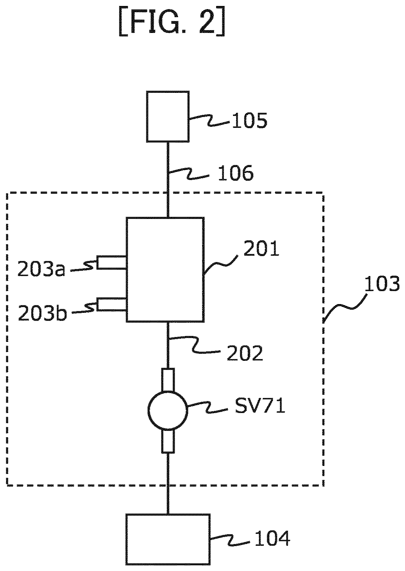

To the waste liquid port 105, a waste liquid that is generated in the preprocessing section 101 and the separation section 127 in processing up to an analysis by the analysis section 102 is discharged. The waste liquid discharged to the waste liquid port 105 is accumulated in the waste liquid tank 104 through a flow passage 106 and the measurement section 103. The configuration of the measurement section 103 is described later with reference to FIG. 2.

The control section 110 is connected to the preprocessing section 101, the analysis section 102, the separation section 127, and the measurement section 103, and controls operations of the respective sections and receives a result of an analysis performed by the analysis section 102. The control section 110 is constituted of a micro processor unit (MPU), for example. The storage section 109 is provided for storing programs and data used in a control of the respective sections, a result of an analysis obtained from the analysis section 102 and the like. The storage section 109 is constituted of a hard disk drive (HDD), a solid state drive (SSD) or the like, for example. The operation section 111 is a section to which an instruction from an operator is inputted. The operation section 111 is constituted of a keyboard and a mouse, a touch panel or the like, for example. The display section 112 is provided for displaying: an instruction inputted via the operation section 111; states of the respective sections; a result of an analysis performed by the analysis section 102; and the like. The display section 112 is constituted of a liquid crystal monitor, a touch panel or the like, for example.

The configuration of the measurement section 103 is described with reference to FIG. 2. The measurement section 103 is provided for measuring a quantity of a waste liquid that flows into the waste liquid tank 104. The measurement section 103 is disposed above the waste liquid tank 104, and has a storage tank 201 and a solenoid valve SV71.

The storage tank 201 is a container in which a waste liquid discharged from the waste liquid port 105 through the flow passage 106 is temporarily stored, and discharges the waste liquid into the waste liquid tank 104 through a piping 202 connected to a bottom surface of the storage tank 201. An organic solvent is contained in the waste liquid in some cases and hence, a material, for example, polypropylene or the like that exhibits resistance against an organic solvent is used for forming the storage tank 201.

The storage tank 201 includes, as sensors for detecting liquid level of a stored waste liquid, a high liquid level sensor 203a and a low liquid level sensor 203b. Detection signals from both sensors are transmitted to the control section 110. A high liquid level that is a liquid level detected by the high liquid level sensor 203a is lower than a liquid level that corresponds to a maximum capacity of a waste liquid that can be accumulated in the waste liquid tank 104. The high liquid level is higher than a low liquid level that is a liquid level detected by the low liquid level sensor 203b. The low liquid level is a lowest liquid level of a waste liquid stored in the storage tank 201. In the detection of a liquid level of a waste liquid, it is preferable to use a sensor that is not brought into contact with the waste liquid such as an optical sensor or an ultrasonic sensor. By enabling the detection of the liquid level without bringing the sensor into contact with the waste liquid, it is possible to use a sensor that does not have resistance against an organic solvent. In a case where an optical sensor that irradiates a beam is used, the storage tank 201 may be formed using an optically transparent material, for example, polypropylene.

The solenoid valve SV71 is a valve which is opened or closed by a control performed by the control section 110, and is mounted on an intermediate portion of the piping 202. When the solenoid valve SV71 is closed, a waste liquid discharged from the waste liquid port 105 is stored in the storage tank 201. When the solenoid valve SV71 is opened, a waste liquid in the storage tank 201 is discharged into the waste liquid tank 104 disposed below the measurement section 103 due to its own weight. The control section 110 opens the solenoid valve SV71 when the control section 110 receives a detection signal from the high liquid level sensor 203a. Accordingly, a remaining capacity Vr in the waste liquid tank 104 can be obtained by the following formula.

$$Vr = V0 - Nop \cdot Vupp \quad \dots \text{(formula 1)}$$

In the formula 1, V0 indicates a maximum capacity of the waste liquid tank 104, Nop indicates the number of times that the solenoid valve V71 is opened, and Vupp indicates a waste liquid quantity corresponding to the high liquid level.

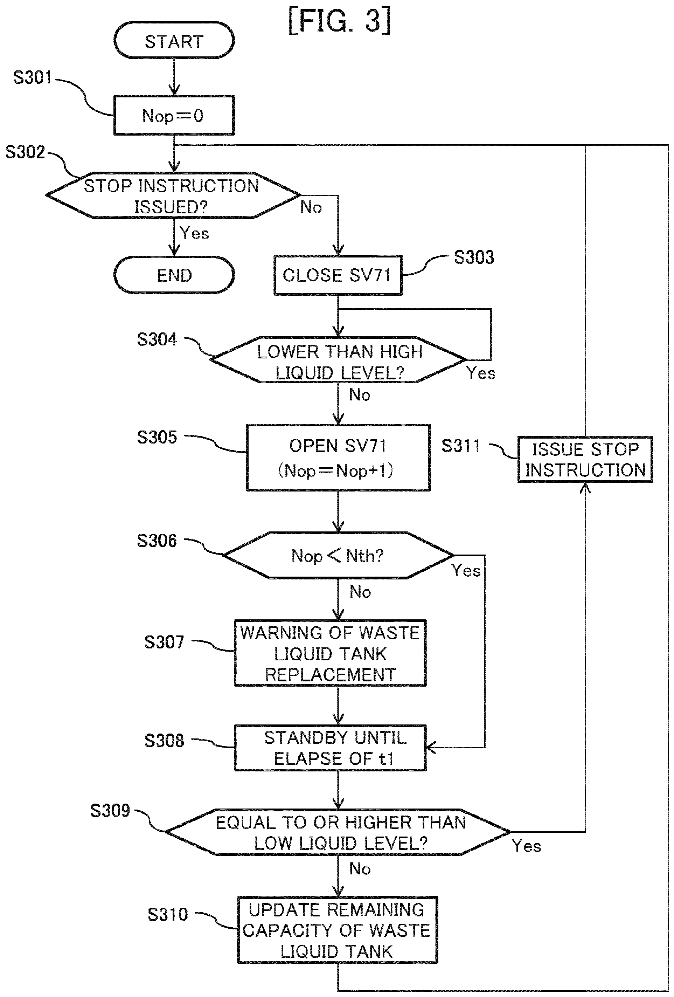

One example of the flow of processing performed in the first embodiment is described with respect to respective steps with reference to FIG. 3.

(S301)

The control section 110 initializes the number of times Nop that the solenoid valve SV71 was opened. That is, the number of times Nop is set to 0 (Nop = 0).

(S302)

The control section 110 determines whether or not a stop instruction is outputted. When the stop instruction is outputted, the flow of the processing is finished, and when the stop instruction is not outputted, the processing advances to step S303.

(S303)

The control section 110 closes the solenoid valve SV71. When the solenoid valve SV71 is closed, a waste liquid is stored in the storage tank 201.

(S304)

The control section 110 determines whether or not a liquid level of the waste liquid stored in the storage tank 201 is below the high liquid level. When the liquid level of the waste liquid is below the high liquid level, step S304 is repeated, and when the liquid level of the waste liquid reaches the high liquid level, the processing advances to step S305. Whether or not the liquid level of the waste liquid stored in the storage tank 201 is less than the high liquid level is determined based on a detection signal transmitted from the high liquid level sensor 203a. That is, when the detection signal is transmitted from the high liquid level sensor 203a, it is determined that the liquid level of the waste liquid has reached the high liquid level.

(S305)

The control section 110 opens the solenoid valve SV71, and counts up the number of times Nop that the solenoid valve SV71 is opened. When the solenoid valve SV71 is opened, a waste liquid stored in the storage tank 201 is discharged to the waste liquid tank 104. A quantity of waste liquid that flows into the waste liquid tank 104 is measured as $Nop \cdot Vupp$ using the number of times Nop that the solenoid valve SV71 is opened and a waste liquid quantity Vupp that corresponds to a high liquid level.

(S306)

The control section 110 determines whether or not the number of times Nop that the solenoid valve SV71 is opened is less than a threshold Nth. When the number of times Nop has reached the threshold Nth, the processing advances to step S307. When the number of times Nop has not reached the threshold Nth, the processing skips step S307 and advances to step S308. The threshold Nth is an upper limit number of times that is set based on a maximum capacity V0 of the waste liquid tank 104, and is set using the following formula, for example.

$$Nth = V0 \, / \, Vupp - 1 \quad \dots \text{(formula 2)}$$

When the number of times Nop that the solenoid valve SV71 is opened exceeds the threshold Nth obtained by the formula 2, a quantity of a waste liquid discharged to the waste liquid tank 104 exceeds a maximum capacity of the waste liquid tank 104 so that the waste liquid overflows from the waste liquid tank 104.

(S307)

The control section 110 generates a warning that prompts an operator to replace the waste liquid tank 104. That is, the control section 110 prompts the operator to replace the waste liquid tank 104 before the overflow of the waste liquid occurs. The replacement of the waste liquid tank 104 is carried out during a period that the solenoid valve SV71 is closed, for example, during a period that step S304 is repeated. When the waste liquid tank 104 is not replaced after processing in step S307 is performed, to avoid the overflowing of the waste liquid from the waste liquid tank 104, the control section 110 may output a stop instruction.

(S308)

The control section 110 stands by until a predetermined time t1 elapses. The predetermined time t1 is a time required for discharging the waste liquid stored until the waste liquid reaches the high liquid level in the storage tank 201 to the waste liquid tank 104. The predetermined time t1 is obtained by the following formula.

$$t1 = (Lupp - Llow) \, / \, U \quad \dots \text{(formula 3)}$$

In the formula 3, Lupp indicates a high liquid level, Llow indicates a low liquid level, and U indicates a flow speed of a waste liquid that flows in the piping 202.

(S309)

The control section 110 determines whether or not the liquid level of the waste liquid stored in the storage tank 201 is equal to or above the low liquid level. When the liquid level of the waste liquid is equal to or above the low liquid level, the processing returns to step S302 via step S311, and when the liquid level of the waste liquid reaches a level below the low liquid level, the processing is returned to step S302 via step S311. That is, in a case where the liquid level of the waste liquid in the storage tank 201 is equal to or above the low liquid level in spite of a fact that the predetermined time t1 has elapsed in step S308, it is determined that abnormality has occurred in the measurement section 103. On the other hand, in a case where the liquid level of the waste liquid in the storage tank 201 is below the low liquid level after the lapse of the predetermined time t1, the determination is made that abnormality has not occurred.

(S310)

The control section 110 updates a remaining capacity of the waste liquid in the waste liquid tank 104. The remaining capacity of the waste liquid is obtained by the formula 1, for example, and the remaining capacity thus obtained is displayed on the display section 112.

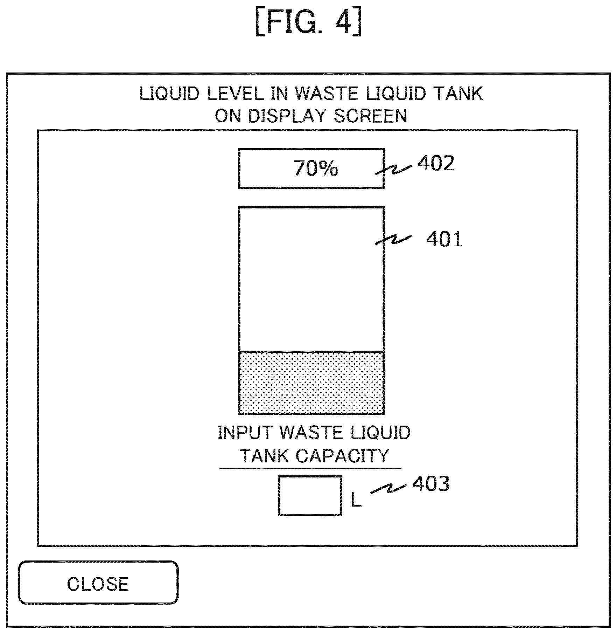

One example of a liquid level display screen that displays a remaining capacity of the waste liquid in the waste liquid tank 104 is described with reference to FIG. 4. The liquid level display screen exemplified in FIG. 4 includes a liquid level display section 401, a remaining capacity display section 402, and a capacity input section 403. On the liquid level display section 401, the liquid level of the waste liquid in the waste liquid tank 104 is indicated by a height of a gray rectangular shape. For example, when the liquid level display section 401 is filled with the gray rectangular shape, the waste liquid tank 104 is in a full-filled state. In the remaining capacity display section 402, a remaining capacity of the waste liquid in the waste liquid tank 104 is indicated by a numerical value. In FIG. 4, it is exemplified that the remaining capacity is 70%. A maximum capacity of the waste liquid in the waste liquid tank 104 is inputted to the capacity input section 403. A value inputted by the capacity input section 403 is used in the formula 1 and formula 2, for example.

(S311)

The control section 110 outputs a stop instruction. The stop instruction outputted in step S311 is used in the determination performed in step S302.

Because of the flow of the processing described with reference to FIG. 3, even in a case where a liquid quantity sensor is not disposed in the waste liquid tank 104, a warning is outputted based on a quantity of a waste liquid measured by the measurement section 103 and hence, the overflowing of the waste liquid from the waste liquid tank 104 can be prevented. Further, the waste liquid tank 104 can be replaced during a period that a waste liquid is stored in the storage tank 201 of the measurement section 103 and hence, it is unnecessary to stop an operation of the automatic analyzer 100.

Second Embodiment

In the first embodiment, the description has been made with respect to the case where a waste liquid stored in the storage tank 201 of the measurement section 103 is discharged to the waste liquid tank 104 that is disposed below the measurement section 103. In the second embodiment, to increase the degree of freedom in the position of the waste liquid tank 104 arranged, the description is made with respect to a waste liquid transfer section that transfers a waste liquid by making use of vacuum aspiration. The automatic analyzer 100 of the second embodiment is the same as the automatic analyzer 100 of the first embodiment and hence, the description of the configuration of the automatic analyzer 100 is omitted in the second embodiment.

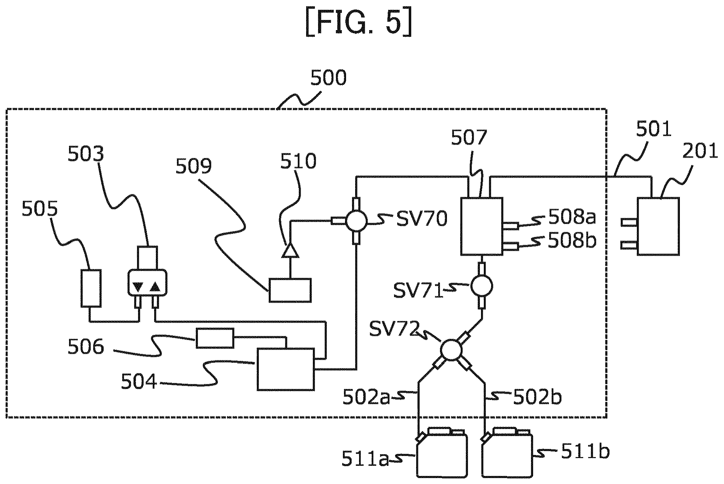

A waste liquid transfer section 500 is described with reference to FIG. 5. The waste liquid transfer section 500 is provided for transferring a waste liquid stored in the storage tank 201 to a waste liquid tank 511a or a waste liquid tank 511b by making use of vacuum aspiration. The waste liquid transfer section 500 includes a vacuum pump 503, a vacuum tank 504, and a vacuum bin 507. The operation of the waste liquid transfer section 500 is controlled by the control section 110. The piping 202 and the solenoid valve SV 71 are not connected to a bottom surface of the storage tank 201.

The vacuum pump 503 is a pump that performs the vacuum aspiration of the vacuum tank 504, and is constituted of a peristaltic pump, a gear pump, a diaphragm pump, a syringe pump or the like. An exhaust filter 505 is connected to an exhaust port of the vacuum pump 503. The exhaust filter 505 is a filter in which activated carbon that adsorbs an organic solvent is packed. The exhaust filter 505 prevents the discharging of a gas generated when the organic solvent is evaporated.

The vacuum tank 504 is a container that is subjected to vacuum aspiration by the vacuum pump 503, and is connected to the vacuum bin 507 via a solenoid valve SV70. The solenoid valve SV70 is a three-way valve, and closes a path leading to the vacuum tank 504, opens a path between the vacuum tank 504 and the vacuum bin 507, or opens a path between a check valve 510 and the vacuum bin 507. During a period that the vacuum aspiration is performed by the vacuum pump 503 in a state where a path between the solenoid valve SV70 and the vacuum tank 504 is closed, the inside of the vacuum tank 504 is maintained in a negative pressure state against an atmospheric pressure. A pressure in the vacuum tank 504 is measured by a pressure sensor 506. A capacity of the vacuum tank 504 is determined based on an ultimate vacuum degree of the vacuum tank 504 and a speed of aspiration of a waste liquid by the vacuum bin 507.

The vacuum bin 507 is a container that aspirates a waste liquid from the storage tank 201 via a piping 501, and temporarily accumulates the waste liquid to be aspirated therein. The vacuum bin 507 includes, as sensors for detecting a liquid quantity of an accumulated waste liquid, a high level liquid quantity sensor 508a and a low level liquid quantity sensor 508b. A high level liquid quantity that is a liquid quantity detected by the high level liquid quantity sensor 508a is a liquid quantity corresponding to a high liquid level of a waste liquid stored in the storage tank 201. A low level liquid quantity that is a liquid quantity detected by the low level liquid quantity sensor 508b is a lowest liquid quantity of a waste liquid stored in the vacuum bin 507.

The solenoid valve SV71 is connected to a bottom surface of the vacuum bin 507, and a piping that communicates with the vacuum tank 504 is connected at a position higher than the high level liquid quantity sensor 508a. A solenoid valve SV72 is connected below the solenoid valve SV71. A piping 502a and a piping 502b are connected to the solenoid valve SV72, the waste liquid tank 511a is connected below the piping 502a, and the waste liquid tank 511b is connected below the piping 502b respectively.

When the solenoid valve SV71 is closed, a waste liquid stored in the storage tank 201 is aspirated by the vacuum bin 507 whose inside is brought into a negative pressure due to opening of a path between the vacuum tank 504 and the vacuum bin 507 by operating the solenoid valve SV70, and is stored in the vacuum bin 507. When a quantity of a waste liquid stored in the vacuum bin 507 reaches a liquid quantity detected by the high level liquid quantity sensor 508a, the solenoid valve SV70 opens a path between the check valve 510 and the vacuum bin 507 so that the vacuum bin 507 is released to an atmosphere. The vacuum bin 507 that is released to an atmosphere stops the aspiration of a waste liquid. The check valve 510 is provided for preventing a waste liquid from flowing from the vacuum bin 507 to the solenoid valve SV70. An intake filter 509 is mounted on a distal end of the check valve 510 so as to prevent the intrusion of a foreign substance into the vacuum bin 507 that is released to an atmosphere.

A waste liquid accumulated in the vacuum bin 507 that is released to an atmosphere is discharged to the waste liquid tank 511a or the waste liquid tank 511b via the solenoid valve SV72 due to opening of the solenoid valve SV71. The discharge destination of a waste liquid is switched by the solenoid valve SV72. The discharge destinations of a waste liquid are not limited to two waste liquid tanks consisting of the waste liquid tank 511a and the waste liquid tank 511b, and the number of discharge destinations may be three or more.

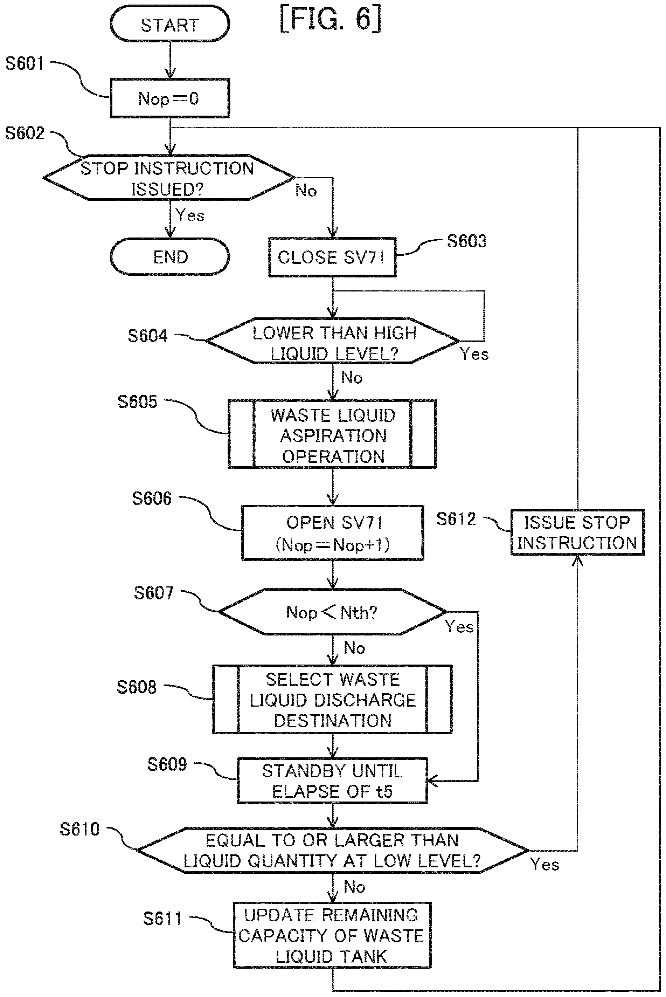

One example of the flow of processing performed in the second embodiment is described with respect to respective steps with reference to FIG. 6. The description of processing substantially equal to the corresponding processing in the first embodiment is omitted.

(S601)

The control section 110 initializes the number of times Nop that the solenoid valve SV71 connected to a bottom surface of the vacuum bin 507 was opened as 0 (Nop = 0).

(S602)

The control section 110 determines, in the same manner as step S302, whether or not a stop instruction is outputted. When the stop instruction is outputted, the flow of the processing is finished, and when the stop instruction is not outputted, the processing advances to step S603.

(S603)

The control section 110 closes the solenoid valve SV71. When the solenoid valve SV71 is closed, a waste liquid is stored in the vacuum bin 507.

(S604)

The control section 110 determines, in the same manner as step S304, whether or not a liquid level of the waste liquid stored in the storage tank 201 is less than the high liquid level. Step S604 is repeated until the liquid level of the waste liquid reaches a high liquid level and, thereafter, the processing advances to step S605.

(S605)

The control section 110 controls an operation of the waste liquid transfer section 500 so as to enable the vacuum bin 507 to aspirate a waste liquid stored in the storage tank 201.

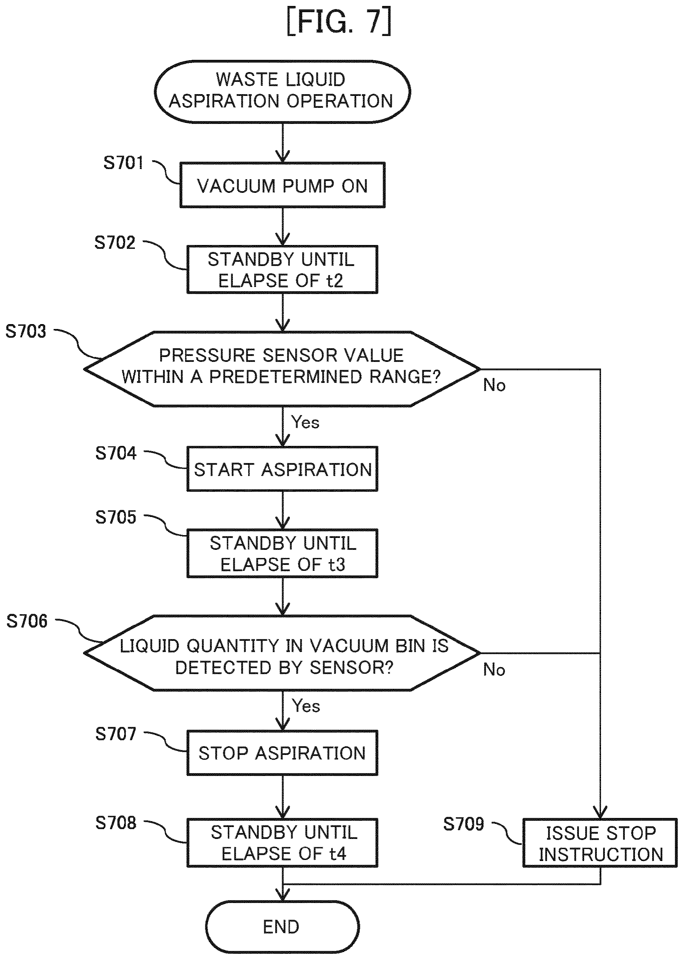

One example of the flow of the processing performed in step S605 is described with respect to each step with reference to FIG. 7.

(S701)

The control section 110 closes a path to the vacuum tank 504 by the solenoid valve SV70, and operates the vacuum pump 503 so as to apply vacuum aspiration to the vacuum tank 504.

(S702)

The control section 110 stands by until a predetermined time t2 elapses. The predetermined time t2 is a time required until the vacuum tank 504 reaches the ultimate vacuum degree, and is set in advance by preliminary measurement.

(S703)

The control section 110 determines whether or not a value measured by the pressure sensor 506 is within a predetermined range. The predetermined range is set in advance based on the ultimate vacuum degree of the vacuum tank 504. When the value of the pressure sensor 506 is within a predetermined range, the processing advances to step S704, and when the value of the pressure sensor 506 is not within the predetermined range, the flow of the processing is finished via step S709.

(S704)

The control section 110 opens a path between the vacuum tank 504 and the vacuum bin 507 by the solenoid valve SV70, makes the vacuum bin 507 aspirate the waste liquid from the storage tank 201.

(S705)

The control section 110 stands by until a predetermined time t3 elapses. The predetermined time t3 is a time required until the waste liquid stored in the storage tank 201 is aspirated into the vacuum bin 507, and is set in advance by the preliminary measurement.

(S706)

The control section 110 determines whether or not a quantity of the waste liquid aspirated into the vacuum bin 507 has reached a liquid quantity that is to be detected by the high level liquid quantity sensor 508a. When the quantity of the waste liquid has reached the liquid quantity of the high level liquid quantity sensor 508a, the processing advances to step S707, and when the quantity of the waste liquid has not reached the liquid quantity of the high level liquid quantity sensor 508a, the flow of the processing is finished via step S709.

(S707)

The control section 110 releases the vacuum bin 507 to an atmosphere by opening a path between the vacuum bin 507 and the check valve 510 by the solenoid valve SV70 thus stopping the aspiration of the waste liquid by the vacuum bin 507. Along with stopping of the aspiration of the waste liquid, the vacuum pump 503 may be also stopped. By stopping the vacuum pump 503, the power consumption of the automatic analyzer 100 can be suppressed.

(S708)

The control section 110 stands by until a predetermined time t4 elapses. The predetermined time t4 is a time required until the inside of the vacuum bin 507 returns to an atmospheric pressure, and is set in advance by the preliminary measurement.

(S709)

The control section 110 determines that an abnormality has occurred in the vacuum aspiration by the vacuum pump 503 or in the aspiration of the waste liquid in the vacuum bin 507, and outputs a stop instruction. The stop instruction outputted in step S709 is used for determination in step S602.

In accordance with the flow of the processing described with reference to FIG. 7, the waste liquid is aspirated from the storage tank 201, and is stored in the vacuum bin 507. The description is made by returning to FIG. 6.

(S606)

The control section 110 opens the solenoid valve SV71 connected to a bottom surface of the vacuum bin 507, and counts up the number of times Nop that the solenoid valve SV71 is opened. By opening the solenoid valve SV71, the waste liquid stored in the vacuum bin 507 is discharged to the waste liquid tank 511a or the waste liquid tank 511b via the solenoid valve SV72. The discharge destination of the waste liquid is decided by a path that is opened by the solenoid valve SV72. That is, when the path that is opened by the solenoid valve SV72 is the piping 502a, the waste liquid is discharged to the waste liquid tank 511a, and when a path to the piping 502b is opened, the waste liquid is discharged to the waste liquid tank 511b.

(S607)

The control section 110 determines whether or not the number of times Nop that the solenoid valve SV71 is opened is less than a threshold Nth. When NoP has reached Nth, the processing advances to step S608, and when NoP has not yet reached Nth, the processing skips step S608 and advances to step S609. The threshold Nth is the upper-limit number of times that is set based on a maximum capacity V0 of the waste liquid tank 511a and the waste liquid tank 511b, and is set using the formula 2, for example.

(S608)

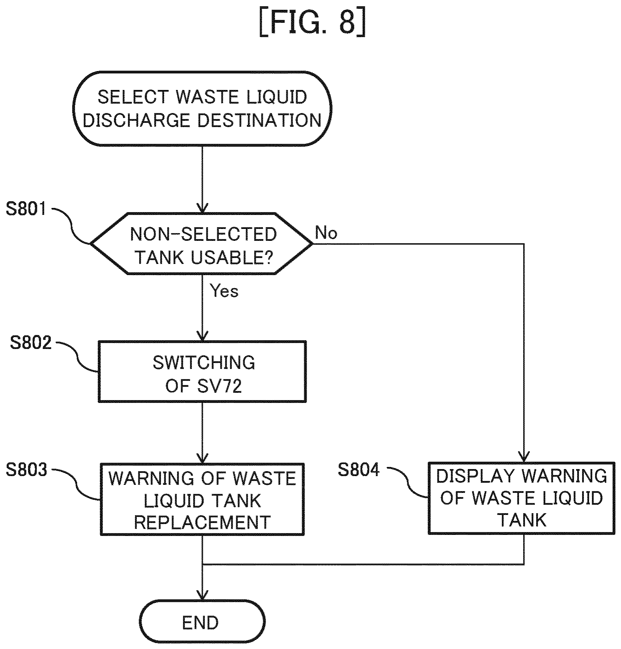

The control section 110 switches the discharge destination of the waste liquid stored in the vacuum bin 507.
One example of the flow of the processing performed in step S608 is described with respect to each step with reference to FIG. 8.

(S801)

The control section 110 determines whether or not the waste liquid tank that is not selected as the discharge destination of a waste liquid out of the waste liquid tank 511a and the waste liquid tank 511b can be used. When the waste liquid tank that is not selected as the discharge destination of the waste liquid can be used, the processing advances to step S802, and when the waste liquid tank that is not selected as the discharge destination of the waste liquid cannot be used, the flow of the processing is finished via step S804. Whether or not the waste liquid tank that is not selected as the discharge destination of the waste liquid can be used is determined based on a remaining capacity of the waste liquid in the waste liquid tank 511a or in the waste liquid tank 511b.

(S802)

The control section 110 switches the discharge destination of the waste liquid to either the waste liquid tank 511a or the waste liquid tank 511b by switching the solenoid valve SV72.

(S803)

The control section 110 outputs a warning to prompt an operator to replace the waste liquid tank 511a or the waste liquid tank 511b that is no more a discharge destination of the waste liquid.

(S804)

The control section 110 outputs a warning that the waste liquid tank 511a or the waste liquid tank 511b that is not the discharge destination of the waste liquid cannot be used, and prompts the operator to replace the waste liquid tank.
In accordance with the flow of the processing described with reference to FIG. 8, the discharge destination of the waste liquid can be switched. In a case where the discharge destination cannot be switched, a warning is outputted accordingly. The description is made by returning to FIG. 6.

(S609)

The control section 110 stands by until a predetermined time t5 elapses. The predetermined time t5 is a time required until the waste liquid stored in the vacuum bin 507 is discharged into the waste liquid tank 511a or into the waste liquid tank 511b. The predetermined time t5 is obtained by the following formula, for example.

$$t5 = (Vupp - Vlow) / Q \dots (formular \ 4)$$

In the formula 4, Vupp indicates a liquid quantity detected by the high level liquid quantity sensor 508a, Vlow indicates a liquid quantity detected by the low level liquid quantity sensor 508b, Q indicates a flow rate of the waste liquid that flows in the piping 502a or the piping 502b.

(S610)

The control section 110 determines whether or not a quantity of the waste liquid stored in the vacuum bin 507 is equal to or more than a low level liquid quantity. When the quantity of the waste liquid is equal to or more than a low level liquid quantity, the processing returns to step S602 via step S612, and when the quantity of the waste liquid reaches a value below the low level liquid quantity, the processing returns to S602 via step S611. That is, in a case where a quantity of the waste liquid stored in the vacuum bin 507 is equal to or more than a low level liquid quantity although a predetermined time t5 has elapsed in step S609, it is determined some abnormalities have occurred in the waste liquid transfer section 500. On the other hand, in a case where a quantity of the waste liquid stored in the vacuum bin 507 is below the low level liquid quantity after a lapse of a predetermined time t5, it is determined that an abnormality has not occurred.

(S611)

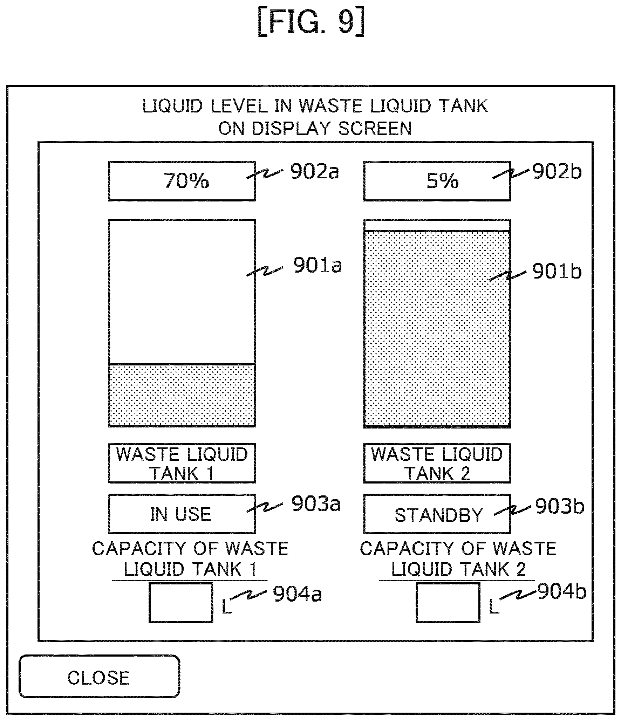

The control section 110 updates a remaining capacity of the waste liquid in the waste liquid tank 511a and a remaining capacity of the waste liquid in the waste liquid tank 511b. The remaining capacities are obtained based on, for example, the formula 1, and the obtained remaining capacities are displayed on the display section 112.
One example of a liquid level display screen that displays the remaining capacity of the waste liquid in the waste liquid tank 511a and the remaining capacity of the waste liquid in the waste liquid tank 511b is described with reference to FIG. 9. The liquid level display screen illustrated in FIG. 9 includes a liquid level display section 901a, a remaining capacity display section 902a, a state display section 903a, a capacity input section 904a, a liquid level display section 901b, a remaining capacity display section 902b, a state display section 903b, and a capacity input section 904b. In the liquid level display section 901a and the liquid level display section 901b, liquid levels of the waste liquids in the waste liquid tank 511a and the waste liquid tank 511b are indicated by heights of gray rectangular shapes respectively. In the remaining capacity display section 902a and the remaining capacity display section 902b, the remaining capacities of the waste liquid in the waste liquid tank 511a and the waste liquid tank 511b are indicated by numerical values respectively. In the state display section 903a and the state display section 903b, the use state of the waste liquid tank 511a and the use state of the waste liquid tank 511b are indicated respectively. The displays on the state display section 903a and the state display section 903b are updated in response to the switching of the solenoid valve SV72. In FIG. 9, the case is illustrated where the waste liquid tank 1 is in a use state as the discharge destination of the waste liquid, and the waste liquid tank 2 is in a standby state. In the capacity input section 904a and in the capacity input section 904b, the maximum capacities of the waste liquid tank 511a and the waste liquid tank 511b are inputted respectively.

(S612)

The control section 110 outputs a stop instruction. A stop instruction outputted in step S612 is used in the determination performed in step S602.
In accordance with the processing described with reference to FIG. 6, even in a case where a liquid quantity sensor cannot not be mounted on the waste liquid tank 104, the discharge destination of the waste liquid can be switched based on a quantity of the waste liquid measured by the waste liquid transfer section 500. Accordingly, it is possible to prevent the overflowing of the waste liquid from the waste liquid tank 511a and the waste liquid tank 511b. Further, the waste liquid is transferred to the waste liquid tank 511a or the waste liquid tank 511b from the storage tank 201 by the waste liquid transfer section 500. Accordingly, the waste liquid tank 511a and the waste liquid tank 511b can be disposed without being limited to a place below the storage tank 201.

Third Embodiment

In the first embodiment, the description is made with respect to the case where a quantity of the waste liquid that flows into the waste liquid tank 104 is measured based on the number of times that the waste liquid that is stored up to the high liquid level in the storage tank 201 is discharged. In a third embodiment, the description is made with respect to a case where a flowmeter is used as a measurement section that measures a quantity of the waste liquid that flows into the waste liquid tank 104. The automatic analyzer 100 of the third embodiment is the same as the automatic analyzer 100 of the first embodiment and hence, the description of the configuration of the automatic analyzer 100 is omitted in the third embodiment.

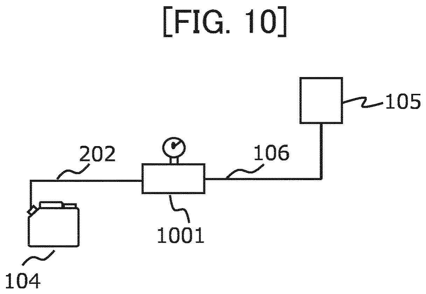

The configuration of the third embodiment is described with reference to FIG. 10. A flowmeter 1001 is disposed between the flow passage 106 connected to the waste liquid port 105 and the piping 202 connected to the waste liquid tank 104, and measures a quantity of a waste liquid discharged from the waste liquid port 105. The waste liquid discharged from the waste liquid port 105 is accumulated in the waste liquid tank 104 via the flow passage 106, the flowmeter 1001 and the piping 202, and a quantity of the waste liquid is measured by the flowmeter 1001. A value measured by the flowmeter 1001 is transmitted to the control section 110 and hence, the control section 110 calculates a remaining capacity of the waste liquid in the waste liquid tank 104 based on a received measurement value. Further, when the calculated remaining capacity becomes less than a threshold, the control section 110 outputs a warning that prompts an operator to replace the waste liquid tank 104.

According to the third embodiment, even in a case where a liquid quantity sensor is not mounted on the waste liquid tank 104, a warning that prompts the operator to switch the waste liquid tank 104 is outputted based on a quantity of a waste liquid measured by the flowmeter 1001. Accordingly, it is possible to prevent overflowing of the waste liquid from the waste liquid tank 104. Further, the measurement section that measures a quantity of the waste liquid that flows into the waste liquid tank 104 is constituted of the flowmeter 1001 and hence, the miniaturization of the automatic analyzer 100 can be realized.

The embodiments of the present invention have been described heretofore. The present invention is not limited to the above-mentioned embodiments, and the constitutional elements in these embodiments may be modified without departing from the gist of the present invention. The plurality of constitutional elements disclosed in the above-mentioned embodiments may be suitably combined with each other. Some constitutional elements may be deleted from the whole constitutional elements described in the above-mentioned embodiments.

List of Reference Signs

100: automatic analyzer, 101: preprocessing section, 102: analysis section, 103: measurement section, 104: waste liquid tank, 105: waste liquid port, 106: flow passage, 107: sample container, 108: reagent container, 109: storage section, 110: control section, 111: operation section, 112: display section, 113: sample dispensing section, 114: transport path, 116: reaction vessel, 118: transport section, 119: opening, 120: reaction disk, 122: reagent disk, 123: reagent dispensing section, 124: magnetic separation section, 125: transport section, 127: separation section, 131: evaporation concentration section, 132: transport section, 133: concentrated liquid dispensing section, 201: storage tank, 202: piping, 203a: high liquid level sensor, 203b: low liquid level sensor, 401: liquid level display section, 402: remaining capacity display section, 403: capacity input section, 500: waste liquid transfer section, 501: piping, 502a: piping, 502b: piping, 503: vacuum pump, 504: vacuum tank, 505: exhaust filter, 506: pressure sensor, 507: vacuum bin, 508a: high level liquid quantity sensor, 508b: low level liquid quantity sensor, 509: intake filter, 510: check valve, 511a: waste liquid tank, 511b: waste liquid tank, 901a: liquid level display section, 901b: liquid level display section, 902a: remaining capacity display section, 902b: remaining capacity display section, 903a: state display section, 903b: state display section, 904a: capacity input section, 904b: capacity input section, 1001: flow meter, SV70: solenoid valve, SV71: solenoid valve, SV72: solenoid valve.

**Claims**

1. An automatic analyzer for analyzing a sample, comprising:

   a waste liquid tank for storing a waste liquid generated from an analysis of the sample;
   a flow passage connected to the waste liquid tank, to which the waste liquid flows;
   a measurement section disposed in the flow passage in order to measure quantity of the waste liquid flowing to the waste liquid tank; and
   a warning section for outputting a warning when the quantity of the waste liquid measured by the measurement section reaches a predetermined value.

2. The automatic analyzer according to claim 1, wherein
   the measurement section includes a storage tank for storing the waste liquid, a detection section for detecting a liquid level of the waste liquid in the storage tank, and a solenoid valve which is connected to a bottom surface of the storage tank, and opened and closed based on a detection signal from the detection section.

3. The automatic analyzer according to claim 2, wherein
   the measurement section measures the quantity of the waste liquid flowing to the waste liquid tank based on the number of times of opening the solenoid valve.

4. The automatic analyzer according to claim 2, wherein:

   the detection section detects a high liquid level and a low liquid level of the storage tank; and
   the solenoid valve is opened when the liquid level of the waste liquid reaches the high liquid level.

5. The automatic analyzer according to claim 4, further comprising
   a determination section for determining that abnormality has occurred when the liquid level of the waste liquid is not below the low liquid level after an elapse of a predetermined time from opening of the solenoid valve.

6. The automatic analyzer according to claim 2, wherein
   the detection section detects the liquid level of the waste liquid without coming into contact with the waste liquid.

7. The automatic analyzer according to claim 6, wherein:

   the detection section is an optical sensor for light irradiation; and
   the storage tank is formed of an optically transparent material.

8. The automatic analyzer according to claim 1, further comprising
   a display section for displaying a remaining capacity of the waste liquid tank.

9. The automatic analyzer according to claim 8, wherein
   the display section further displays a capacity input section for receiving an input of a maximum capacity of the waste liquid tank.

10. The automatic analyzer according to claim 1, wherein:

    a plurality of waste liquid tanks are provided; and
    a selection unit is further provided for selection of the waste liquid tank which stores the waste liquid when the quantity of the waste liquid measured by the measuring section reaches a predetermined value.

11. The automatic analyzer according to claim 10, further comprising
    a display section for displaying a remaining capacity of the waste liquid tank, and the waste liquid tank selected for storing the waste liquid.

12. The automatic analyzer according to claim 1, further comprising
    a waste liquid transfer section for transferring the waste liquid to the waste liquid tank by vacuum aspiration.

13. The automatic analyzer according to claim 12, wherein
    the waste liquid transfer section includes a vacuum bin which aspirates the waste liquid, and stores the aspirated waste liquid, a detection section for detecting quantity of the waste liquid stored in the vacuum bin, and a solenoid valve which is connected to a bottom surface of the vacuum bin, and opened and closed based on a detection signal from the detection section.

14. The automatic analyzer according to claim 13, wherein:

    the detection section detects a liquid quantity at high liquid level of the vacuum bin; and
    the solenoid valve is opened when the quantity of the waste liquid stored in the vacuum bin reaches the liquid quantity at high liquid level.

15. The automatic analyzer according to claim 1, wherein
    the measurement section is a flow meter.

[FIG. 1]

EP 4 682 544 A1

[FIG. 2]

# [FIG. 3]

```
            START
              │
S301 ──┐      ▼
       └── Nop=0
              │
              ▼
S302 ──┐  STOP INSTRUCTION ───── No ──┐
       └── ISSUED?                     │
              │ Yes                    ▼
              ▼                   CLOSE SV71 ──┐── S303
            END                       │        
                                      ▼
S304 ──┐  LOWER THAN HIGH ───── Yes ──┐
       └── LIQUID LEVEL?              (loop back)
              │ No
              ▼
S305 ──┐  OPEN SV71            S311 ──┐ ISSUE STOP
       └── (Nop=Nop+1)               └── INSTRUCTION
              │
              ▼
S306 ──┐  Nop < Nth? ───── Yes ──┐
       └──                        │
              │ No                │
              ▼                   │
S307 ──┐  WARNING OF WASTE        │
       └── LIQUID TANK            │
            REPLACEMENT           │
              │                   │
              ▼                   │
S308 ──┐  STANDBY UNTIL ◄─────────┘
       └── ELAPSE OF t1
              │
              ▼
S309 ──┐  EQUAL TO OR HIGHER THAN ───── Yes ──┐
       └── LOW LIQUID LEVEL?                  (to S311)
              │ No
              ▼
S310 ──┐  UPDATE REMAINING
       └── CAPACITY OF WASTE
            LIQUID TANK
```

# [FIG. 4]

LIQUID LEVEL IN WASTE LIQUID TANK
ON DISPLAY SCREEN

70%  ⌇ 402

⌇ 401

INPUT WASTE LIQUID
TANK CAPACITY

L  ⌇ 403

CLOSE

[FIG. 5]

EP 4 682 544 A1

[FIG. 6]

START

S601 — Nop＝0

S602 — STOP INSTRUCTION ISSUED? — No → CLOSE SV71 — S603

Yes → END

S604 — LOWER THAN HIGH LIQUID LEVEL? — Yes (loop back)

No

S605 — WASTE LIQUID ASPIRATION OPERATION

S606 — OPEN SV71 (Nop＝Nop+1)

S612 — ISSUE STOP INSTRUCTION

S607 — Nop ＜ Nth? — Yes

No

S608 — SELECT WASTE LIQUID DISCHARGE DESTINATION

S609 — STANDBY UNTIL ELAPSE OF t5

S610 — EQUAL TO OR LARGER THAN LIQUID QUANTITY AT LOW LEVEL? — Yes

No

S611 — UPDATE REMAINING CAPACITY OF WASTE LIQUID TANK

## [FIG. 7]

```
         ┌─────────────────────────┐
         │     WASTE LIQUID        │
         │  ASPIRATION OPERATION   │
         └─────────────────────────┘
                     │
                     ▼
S701      ┌─────────────────────────┐
          │     VACUUM PUMP ON      │
          └─────────────────────────┘
                     │
                     ▼
S702      ┌─────────────────────────┐
          │     STANDBY UNTIL       │
          │      ELAPSE OF t2       │
          └─────────────────────────┘
                     │
                     ▼
S703    ╱─────────────────────────────╲
        │   PRESSURE SENSOR VALUE     │──── No ──┐
        ╲ WITHIN A PREDETERMINED RANGE?╱          │
                     │                            │
                    Yes                           │
                     ▼                            │
S704      ┌─────────────────────────┐             │
          │     START ASPIRATION    │             │
          └─────────────────────────┘             │
                     │                            │
                     ▼                            │
S705      ┌─────────────────────────┐             │
          │     STANDBY UNTIL       │             │
          │      ELAPSE OF t3       │             │
          └─────────────────────────┘             │
                     │                            │
                     ▼                            │
S706    ╱─────────────────────────────╲           │
        │ LIQUID QUANTITY IN VACUUM BIN IS │─ No ──┤
        ╲  DETECTED BY SENSOR?         ╱           │
                     │                            │
                    Yes                           │
                     ▼                            │
S707      ┌─────────────────────────┐             │
          │     STOP ASPIRATION     │             │
          └─────────────────────────┘             │
                     │                            ▼
                     ▼              S709   ┌──────────────┐
S708      ┌─────────────────────────┐      │ ISSUE STOP   │
          │     STANDBY UNTIL       │      │ INSTRUCTION  │
          │      ELAPSE OF t4       │      └──────────────┘
          └─────────────────────────┘             │
                     │                            │
                     ▼◄───────────────────────────┘
              ┌──────────────┐
              │     END      │
              └──────────────┘
```

[FIG. 8]

```
        ┌─────────────────────────┐
        │   SELECT WASTE LIQUID    │
        │  DISCHARGE DESTINATION   │
        └─────────────────────────┘
                    │
                    ▼
S801          ╱─────────────╲           No
         ╱   NON-SELECTED      ╲ ──────────────────────────┐
         ╲   TANK USABLE?      ╱                           │
          ╲─────────────────╱                              │
                    │ Yes                                   │
                    ▼                                       │
S802     ┌─────────────────────┐                           │
         │     SWITCHING       │                           │
         │      OF SV72        │                           │
         └─────────────────────┘                           │
                    │                                       │
                    ▼                                       ▼
S803  ┌─────────────────────┐       S804  ┌─────────────────────┐
      │  WARNING OF WASTE   │             │   DISPLAY WARNING    │
      │    LIQUID TANK      │             │   OF WASTE LIQUID    │
      │   REPLACEMENT       │             │        TANK          │
      └─────────────────────┘             └─────────────────────┘
                    │                               │
                    └───────────────┬───────────────┘
                                    ▼
                           ┌─────────────────┐
                           │       END       │
                           └─────────────────┘
```

# [FIG. 9]

LIQUID LEVEL IN WASTE LIQUID TANK
ON DISPLAY SCREEN

| 70% | 902a | 5% | 902b |

901a

901b

| WASTE LIQUID TANK 1 | | WASTE LIQUID TANK 2 | |

| IN USE | 903a | STANDBY | 903b |

CAPACITY OF WASTE
LIQUID TANK 1

L 904a

CAPACITY OF WASTE
LIQUID TANK 2

L 904b

CLOSE

[FIG. 10]

## INTERNATIONAL SEARCH REPORT

| International application No. |
|---|
| **PCT/JP2024/004216** |

### A. CLASSIFICATION OF SUBJECT MATTER

*G01N 35/00*(2006.01)i
FI:   G01N35/00 F

According to International Patent Classification (IPC) or to both national classification and IPC

### B. FIELDS SEARCHED

Minimum documentation searched (classification system followed by classification symbols)

G01N35/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2017-523434 A (COUNSYL, INC.) 17 August 2017 (2017-08-17) paragraphs [0107]-[0111] | 1-2, 12-15 |
| Y | | 6-11 |
| A | | 3-5 |
| Y | JP 2008-241500 A (FUJIFILM CORPORATION) 09 October 2008 (2008-10-09) paragraph [0029] | 6-7 |
| Y | WO 2021/145108 A1 (HITACHI HIGH-TECH CORPORATION) 22 July 2021 (2021-07-22) paragraph [0065] | 6-7 |
| Y | JP 2016-95133 A (HITACHI HIGH-TECHNOLOGIES CORPORATION) 26 May 2016 (2016-05-26) paragraph [0024], [0080], fig. 11 | 8-11 |
| A | JP 4-99961 A (DAINIPPON SEIKI KK) 31 March 1992 (1992-03-31) fig. 1 | 1-15 |

☑ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **13 March 2024** | **09 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
| --- |
| **PCT/JP2024/004216** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 5-172824 A (KABUSHIKI KAISHA TOSHIBA) 13 July 1993 (1993-07-13)<br>fig. 2 | 1-15 |
| A | JP 2003-294763 A (KABUSHIKI KAISHA TOSHIBA) 15 October 2003 (2003-10-15)<br>fig. 4 | 1-15 |
| A | JP 2010-513928 A (ABBOTT LABORATORIES) 30 April 2010 (2010-04-30)<br>fig. 4 | 1-15 |
| A | JP 2014-196948 A (NIHON KOHDEN CORPORATION) 16 October 2014 (2014-10-16)<br>fig. 1 | 1-15 |
| A | JP 2016-3967 A (KABUSHIKI KAISHA TOSHIBA) 12 January 2016 (2016-01-12)<br>paragraph [0148] | 1-15 |
| A | CN 106546758 A (DIRUI INDUSTRIAL CO., LTD.) 29 March 2017 (2017-03-29)<br>fig. 4 | 1-15 |
| A | WO 2021/038918 A1 (HITACHI HIGH-TECH CORPORATION) 04 March 2021<br>(2021-03-04)<br>fig. 2 | 1-15 |

Form PCT/ISA/210 (second sheet) (July 2022)

## INTERNATIONAL SEARCH REPORT
### Information on patent family members

International application No.

**PCT/JP2024/004216**

| Patent document cited in search report | | | Publication date (day/month/year) | Patent family member(s) | | | Publication date (day/month/year) |
|---|---|---|---|---|---|---|---|
| JP | 2017-523434 | A | 17 August 2017 | US | 2016/0045918 | A1 | |
| | | | | paragraphs [0130]-[0134] | | | |
| | | | | WO | 2016/025057 | A1 | |
| | | | | CA | 2956303 | A1 | |
| | | | | CN | 106574267 | A | |
| JP | 2008-241500 | A | 09 October 2008 | (Family: none) | | | |
| WO | 2021/145108 | A1 | 22 July 2021 | US | 2023/0067353 | A1 | |
| | | | | paragraph [0097] | | | |
| | | | | EP | 4092419 | A1 | |
| | | | | CN | 114868022 | A | |
| JP | 2016-95133 | A | 26 May 2016 | (Family: none) | | | |
| JP | 4-99961 | A | 31 March 1992 | (Family: none) | | | |
| JP | 5-172824 | A | 13 July 1993 | (Family: none) | | | |
| JP | 2003-294763 | A | 15 October 2003 | (Family: none) | | | |
| JP | 2010-513928 | A | 30 April 2010 | US | 2008/0154543 | A1 | |
| | | | | fig. 4 | | | |
| | | | | CA | 2673026 | A1 | |
| JP | 2014-196948 | A | 16 October 2014 | (Family: none) | | | |
| JP | 2016-3967 | A | 12 January 2016 | (Family: none) | | | |
| CN | 106546758 | A | 29 March 2017 | (Family: none) | | | |
| WO | 2021/038918 | A1 | 04 March 2021 | US | 2022/0250957 | A1 | |
| | | | | fig. 2 | | | |
| | | | | EP | 4024050 | A1 | |
| | | | | CN | 114207449 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021038918 A